**Europäisches Patentamt**

**European Patent Office**

**Office européen des brevets**

(19)

(11) Publication number : **0 484 326 B1**

# EUROPEAN PATENT SPECIFICATION

(12)

(45) Date of publication of patent specification :
**12.04.95 Bulletin 95/15**

(51) Int. Cl.⁶ : **G05D 16/00**

(21) Application number : **89909505.3**

(22) Date of filing : **24.07.89**

(86) International application number :
**PCT/US89/03137**

(87) International publication number :
**WO 91/01522 07.02.91 Gazette 91/04**

(54) **COMPENSATED PRESSURE CONTROLLER.**

(43) Date of publication of application :
**13.05.92 Bulletin 92/20**

(45) Publication of the grant of the patent :
**12.04.95 Bulletin 95/15**

(84) Designated Contracting States :
**DE FR GB IT**

(56) References cited :
**EP-A- 0 287 461**
**FR-A- 2 389 818**
**GB-A- 2 158 616**
**US-A- 3 047 010**
**US-A- 4 083 375**
**US-A- 4 228 819**
**US-A- 4 253 484**
**US-A- 4 300 748**

(73) Proprietor : **UNITED TECHNOLOGIES
CORPORATION
United Technologies Building
1, Financial Plaza
Hartford, CT 06101 (US)**

(72) Inventor : **GOODMAN, Robert, B.
120 Fuller Drive
West Hartford, CT 06117 (US)**

(74) Representative : **Weydert, Robert et al
OFFICE DENNEMEYER S.à.r.l.
55, rue des Bruyères
L-1274 Howald (LU)**

## Description

Field of the Invention

The present invention concerns a fluid pressure controller of the type having a control conduit for discharging fluid under pressure through a nozzle into a control volume and in which the discharge area of the nozzle is controlled by a diaphragm responsive to regulated pressure and the control volume pressure and a modulated pressure upstream of the nozzle is delivered to a valve actuator.

Background

Pneumatic pressure controllers for regulating a flow of fluid between a high pressure source of supply and a regulated, lower pressure environment are well known. Such controllers monitor the regulated pressure downstream of a throttling valve and compare it to the ambient pressure for producing a modulated actuator control pressure signal. The actuator signal drives an pneumatic actuator for positioning the control valve and thereby throttling the control valve from the supply source.

One common method of achieving the modulated actuator pressure signal is by means of a control nozzle discharging fluid under pressure into a control volume and having a variable flow restrictor driven by a mechanical linkage coupled to a differential pressure downstream of the throttle or control valve against an ambient or other reference pressure, varying the discharge area of the control nozzle and hence, the upstream nozzle pressure.

An actuator control conduit transmits the upstream nozzle pressure to an pneumatic actuator which in turn positions the throttle valve for regulating the pressure downstream. Such controllers typically use the fluid from the high pressure supply to feed the control nozzle and position the pneumatic actuator and hence may be subject to errors introduced as the supply source pressure is increased.

One such error may arise in a controller arrangement in which this pneumatic actuator is of the "half-area" type. Such actuators include two linked, differential area pistons which are separately pressurized by the fluid supply source and the modulated upstream nozzle pressure. Modulated pressure therefore rises with increased supply pressure.

As the required modulated pressure increases, the pressure on the nozzle restrictor plate also increases contributing to a droop in actual regulated pressure downstream of the valve as the linkage is driven backward by the static pressure on the restrictor plate. This error is further compounded by the need to increase the size and flow capability of the control nozzle and control conduit to allow for the possibility of increased leakage in the pneumatic actuator which may result from the increased pressure requirement. A larger control nozzle, of course, requires a larger restrictor plate thereby further elevating the backforce on the deflector plate.

One prior art solution to this problem is to increase the area of the pressure deflectable diaphragm, however, it will be appreciated that the use of larger and, therefore, heavier components alters the dynamic response of the controller possibly reducing the initial response time due to the increased component mass, as well as altering the damping characteristics of the linkage and diaphragm such that undesirable pressure fluctuations could occur during certain operating conditions.

What is required is a pressure controller of the described type which is able to compensate for increased supply pressure and control nozzle flow without altering the mechanical configuration and size of the nozzle flow restrictor linkage in the pressure comparator.

A different type of pressure controller is disclosed in US-A-4,083,375. In this known pressure controller fluid under pressure is discharged into a control volume. A diaphragm responsive to regulated pressure and the pressure in the control volume controls fluid flow from the control volume through a vent opening. The pressure in the control volume is communicated to the valve actuator. Another different type of pressure controller is disclosed in GB-A-2,158,616 in which a pilot valve actuated by a diaphragm responsive to the regulated pressure controls flow of high pressure fluid to a valve actuator or draining thereof through a vent port. It is pointed out that this invention is not concerned with a pressure controller of the type disclosed in US-A-4,083,375 or GB-A-2,158,616.

Disclosure of the Invention

The object of the present invention is to provide a fluid pressure controller of the type concerned for maintaining a constant regulated fluid pressure from a variable supply pressure and with self-compensation for elevated fluid supply pressure.

According to the present invention this is achieved by the fluid pressure regulator as defined in the independent claim. The pressure controller for providing a modulated actuator pressure signal includes a control volume receiving a flow of fluid from the high pressure fluid supply source. The controller further includes a control nozzle for discharging the control fluid into the volume and a variable nozzle flow restrictor responsive to the static pressure differential between the interior of the control volume and the current regulated fluid pressure. The nozzle restrictor acts to modulate the control fluid pressure upstream of the discharging control nozzle, with the upstream pressure being delivered by means of an actuator conduit to an pneumatic actuator for positioning a throttling control valve disposed between the high pressure fluid supply and the regulated fluid pressure volume.

The present invention avoids the droop in regulated pressure which occurs in the prior art in higher supply pressures by providing a restricted vent opening through which the discharged control fluid exits the control volume to the ambient surroundings. The restricted vent results in an elevated static fluid pressure within the control volume at higher control fluid flow rates corresponding to elevated fluid supply pressures. The higher fluid pressure in the control volume provides a correcting force on the nozzle restrictor, via the diaphragm and mechanical linkage, compensating for the increased nozzle static discharge pressure.

The controller according the present invention, is self-compensating with respect to increased fluid supply pressures and therefore able to accommodate elevated pressures and increased control fluid flow rates without requiring any deleterious modification of the controller mechanical design or dynamics.

Both these and other features and advantages of the pressure controller according to the present invention will be apparent to those skilled in the art following a review of the following detailed description and the appended claims and drawing figures.

## Brief Description of the Drawings

Figure 1 shows a schematic arrangement of a pressure controller, actuator, and throttle valve, according to the present invention.

Figure 2 shows a detailed view of the control nozzle and pressure restrictor.

Figure 3 compares the performance of the controller according to the present invention with a prior art pressure controller.

## Detailed Description

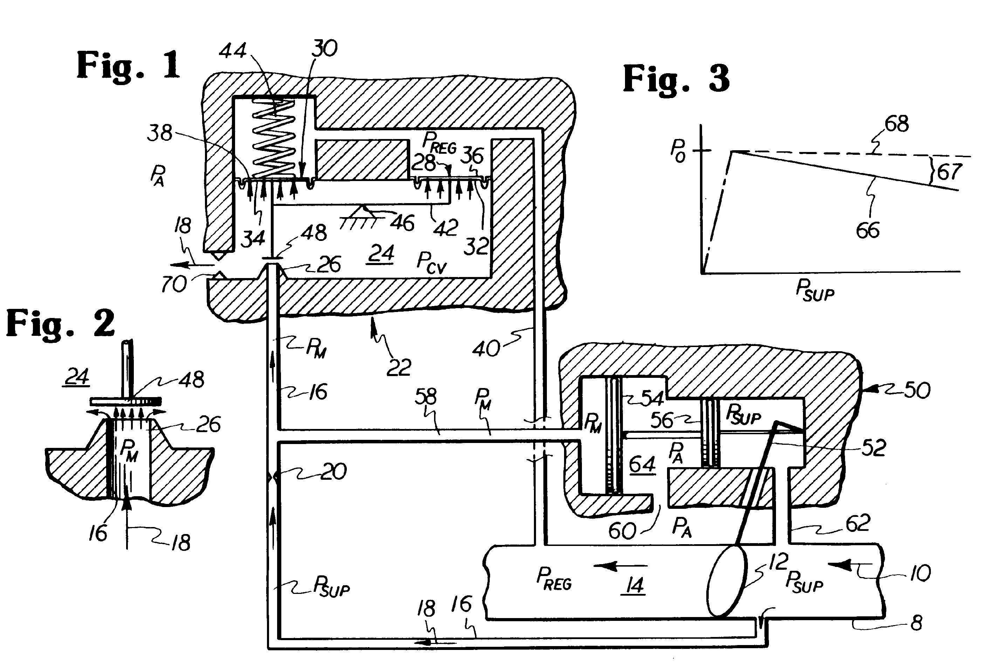

Referring now to the drawing figures, and in particular to Figure 1 thereof, the pressure controller according to the present invention will be disclosed in detail. Figure 1 shows a ducts with flow of pressurized fluid 10 passing through a throttling valve 12 and into a lower pressure zone 14 in which the static fluid pressure, $P_{REG}$ is to be regulated at a pre-selected magnitude. A portion of the main fluid flow 10 is diverted from the duct 8 upstream of the throttling valve 12 into a first control conduit 16. The control fluid flow 18 in the control conduit 16 passes through a flow regulating orifice 20 at sonic velocity thus achieving "choked" flow through the nozzle under normally expected supply, $P_{SUP}$, and downstream, $P_M$, pressures.

The choked flow regime occurs when the pressure ratio $P_M/P_{SUP}$ across the orifice 20 is less than a critical pressure ratio which corresponds to the acceleration of the fluid flowing through such orifice to sonic velocity. One characteristic of choked flow is the non-responsiveness of the fluid mass flow rate to downstream static pressure, $P_M$. As is well known in the art of compressible fluid dynamics, the mass flow of compressible fluid through a choked orifice is a function of the upstream pressure and temperature only. Hence, for the orifice 20 in the control conduit 16:

$$W_{20} = .53A_{20}C_D P_{SUP}/\sqrt{T_{SUP}}$$

wherein:

$W_{20}$ equals mass flow through the constriction 20;

$A_{20}$ equals cross sectional air flow area of the orifice 20;

$C_B$ equals the discharge coefficient of the orifice 20;

$P_{SUP}$ equals absolute fluid pressure upstream of the throttling valve 12; and

$T_{SUP}$ equals absolute fluid temperature of the fluid upstream of the throttling valve 12.

Control fluid 18, after flowing past the restriction 20, continues into the pressure comparator 22 of the pressure controller, discharging into a internal control volume 24 via a control or discharge nozzle 26. The pressure comparator 22 includes a first and a second diaphragm 28, 30 each having a control volume facing side 32, 34 and an opposite side 36, 38 which is in fluid communication with the regulated pressure volume 14 downstream of the throttling valve 12 by means of a second control conduit 40.

The area of the first diaphragm 28 is larger than the area of the second diaphragm 30, with the center of the two diaphragms 28, 30 connected by a pivoted balance beam 42. The second diaphragm 30 may also include a spring 44 or other urging means for achieving an equilibrium force balance about the balance pivot 46. Also included within the pressure comparator 22 is a control nozzle flow restrictor 48 which is secured to one end of the balance beam 42 and which moves in response to deflections of the balance beam 42 as discussed below.

As will be appreciated by those skilled in the art, variations in the regulated pressure $P_{REG}$ alter the force balance on the balance beam 42 thereby causing the balance beam 42 to deflect until the urging spring 44 is compressed or relaxed sufficiently to re-establish the equilibrium force balance. Such deflections of the balance beam 42 cause the flow restrictor 48 to approach or withdraw with respect to the discharge nozzle 26 thereby varying the effective nozzle outlet area and increasing or decreasing the pressure in the first control conduit 16 between the flow constrictor 20 and the discharge nozzle 26. This varying, modulated pressure $P_M$ is the pressure signal used by the controller according to the present invention to activate an pneumatic actuator 50 for repositioning the throttle valve 12 in order to maintain the pressure $P_{REG}$ within the controlled pressure volume 14.

Actuator 50 as shown in Figure 1 is a "half area" actuator wherein a linkage 52 for positioning the valve 12 is driven by joined pistons 54, 56. Piston 54 is pressurized on one face thereof by the modulated pressure $P_M$ provided from the upstream side of the discharge nozzle 26 by an actuator conduit 58. The other face of the first piston 54 is exposed to ambient pressure $P_A$ within the interior 64 of the actuator 50 via ambient pressure vent 60. The second piston 56 is sized to have one-half the surface area of the first piston 54 and is pressurized at one face thereof by the supply pressure $P_{SUP}$ provided by supply pressure conduit 62. The opposite surface of the second piston 56 likewise faces the central ambient pressure cavity 64 within the actuator 50.

The function of the actuator 50 should now be readily apparent. Modulated pressure $P_M$ is maintained by the flow restrictor 48 and control nozzle 26 at approximately one-half the supply pressure $P_{SUP}$, thereby achieving a force balance on the joined pistons 54, 56 within the actuator 50. Should regulated pressure fall below the pre-selected level, balance beam 42 is deflected by the combined pressure and urging forces on the diaphragms 28, 30 thereby restricting the flow of control fluid 18 from the control nozzle 26, increasing the pressure $P_M$ upstream of the nozzle 26 and urging driving pistons 54, 56 toward the right in Figure 1. Such movement corresponds to opening of the throttle valve 12 thereby admitting a greater flow of fluid 10 into the control pressure volume 14, thereby restoring the pressure level to the pre-selected level. An excess of pressure on the downstream side of the valve 12, would, of course, produce the opposite effects and actions within the controller according to the present invention, thereby closing the throttling valve 12 and again correcting the downstream over pressure.

Figure 3 shows a curve 66 representing the performance of an prior art pressure controller and a second curve 68 showing the performance of the pressure controller according to the present invention. As supply pressure increases, the regulated pressure in the volume 14 downstream at the throttling 12 for a prior art controller is observed to droop 67 below the selected pressure $P_0$.

The cause of this droop is best explained with reference to Figure 2 which is an enlarged detail of the control nozzle 26 within the control volume 24 of the pressure comparator 22. As can be seen in Figure 2, the control conduit 16 provides a flow 18 of control fluid which exits the nozzle 26 into the control volume 24.

Flow restrictor 48 is positioned adjacent the control nozzle 26 for restricting the flow therefrom, thereby maintaining the pressure of $P_M$ upstream of the nozzle 26 at approximately one-half the supply pressure $P_{SUP}$. Flow restrictor 48 is urged away from the nozzle 26 by the static pressure $P_M$. This force, calculated as the product of the nozzle area, $A_N$ and the control nozzle pressure $P_M$ can be sufficient to alter the force balance on the balance beam 42, causing the flow restrictor to be pushed away from the nozzle 26 thus reducing the actuator control pressure signal $P_M$. This reduction increases with increasing supply pressure thus resulting in the droop 67 below the desired regulated pressure $P_0$ as shown in Figure 3.

The controller according to the present invention provides a means for compensating against such droop caused by elevated supply pressure. The present invention provides a vent orifice 70 disposed at the outlet of the control volume 24 through which substantially all of the control fluid flow 18 exits to the surroundings. By properly sizing the vent orifice 70, the pressure $P_{CV}$ within the control volume 24 can be made to increase as the control fluid flow 18 increases as a function of the supply pressure $P_{SUP}$. Hence, the increased back pressure within the control volume $P_{CV}$ provides a correcting force on the diaphragms 28, 30 for urging the flow restrictor 48 towards the nozzle 26 and reducing the pressure differential across the flow restrictor 48, thereby maintaining the modulating pressure $P_M$ within the control conduit 16.

The resulting performance curve 68 shown in Figure 3 shows the controller according to the present invention as correcting substantially all the droop experienced by prior art controllers. Proper sizing of the vent orifice 70 with respect to the expected supply and ambient pressures, $P_{SUP,}$ $P_A$ will enable the controller according to the present invention to maintain the regulated pressure $P_{REG}$ in the regulated volume 14 at the preselected $P_0$ even at elevated supply pressures $P_{SUP}$.

A typical range of supply pressures which may be accommodated by the controller according to the present invention is in the range of 100 to 450 psia, (690-3100kPa) with the preselected regulated pressure $P_0$ being approximately 100 psia (690kPa).

It will be further appreciated by those skilled in the art that the compensating means according to the present invention does not require resizing of the deflecting diaphragms 28, 30, the balance beam 42, or other components such as the actuator 50 of the prior art pressure controller. Hence, the controller according to the present invention maintains the same dynamic response/damping as the prior art configuration and does not require the use of heavier or larger components to accommodate the higher supply and modulated pressures.

### Claims

1. Fluid pressure regulator having a control valve (12) disposed in a fluid conveying duct (8), the fluid upstream of the valve (12) being supplied at a first, higher pressure and the fluid downstream of the valve (12) being regulated to a second, lower pressure, the regulator further including:

   a first control conduit (16) receiving a control flow fluid from the duct (8) upstream of the control valve (12) and discharging the control flow of fluid from a control nozzle (26) into a control volume (24),

   an orifice (20), disposed in the first control conduit (16) and sized to result in the control flow of fluid therethrough being within the choke flow regime,

   a differential pressure deflectable diaphragm (28) having a first side (32) facing the interior of the control volume (24) and a second side (36) in fluid communication with the duct (8) downstream of the control valve (12) via a second control conduit (40),

   means, responsive to deflection of the diaphragm (28), for restricting the control flow of fluid at the control nozzle (26),

   an actuator conduit (58), connected to the first control conduit (16) at a point intermediate the sized orifice (20) and the control nozzle (26), the actuator conduit (58) delivering a modulated control pressure actuation signal to an pneumatic valve actuator (50) cooperatively linked to the control valve (12), and

   a vent orifice (70) disposed between the interior of the control volume (24) and the controller surroundings, said vent orifice (70) venting the entire control flow of fluid from the control volume (24) to the surroundings, said vent orifice (70) further being sized to result in an elevated static fluid pressure within the control volume (24) as compared with ambient static pressure during periods of relatively high control fluid flow.

2. Pressure regulator according to claim 1, wherein the valve actuator (50) is of the "half-area" type having two linked differential area pistons (54, 56), the smaller area piston (56) being pressurized by fluid under supply pressure and the larger area piston (54) being pressurized by fluid under modulated control pressure.

das Fluid stromabwärts des Ventils (12) auf einen zweiten, niedrigeren Druck geregelt wird, wobei der Regler weiter umfaßt:

   eine erste Steuerleitung (16), die ein Steuerströmungsfluid aus der Leitung (8) stromaufwärts des Steuerventils (12) aufnimmt und die Fluidsteuerströmung aus einer Steuerdüse (26) in einen Steuerraum (24) abgibt,

   eine Öffnung (20), die in der ersten Steuerleitung (16) angeordnet ist und so dimensioniert ist, daß infolgedessen die durch sie hindurchgehende Fluidsteuerströmung im gedrosselten Strömungsbetrieb ist,

   eine durch Differenzdruck auslenkbare Membran (28) mit einer ersten Seite (32), die dem Inneren des Steuerraums (24) zugewandt ist, und einer zweiten Seite (36), die in Fluidverbindung mit der Leitung (8) stromabwärts des Steuerventils (12) über eine zweite Steuerleitung (40) ist,

   eine auf eine Auslenkung der Membran (28) ansprechende Einrichtung zum Begrenzen der Fluidsteuerströmung an der Steuerdüse (26),

   eine Stellantriebsleitung (58), die mit der ersten Steuerleitung (16) in einem Punkt zwischen der dimensionierten Öffnung (20) und der Steuerdüse (26) verbunden ist, wobei die Stellantriebsleitung (58) ein moduliertes Steuerdruckbetätigungssignal zu einem pneumatischen Ventilstellantrieb (50) liefert, der mit dem Steuerventil (12) zusammenwirkend verbunden ist, und

   eine Ablaßöffnung (70), welche zwischen dem Inneren des Steuerraums (24) und der Reglerumgebung angeordnet ist, wobei die Ablaßöffnung (70) die gesamte Fluidsteuerströmung aus dem Steuerraum (24) in die Umgebung abgibt, wobei die Ablaßöffnung (70) weiter so dimensioniert ist, daß sie zu einem erhöhten statischen Fluiddruck in dem Steuerraum (24) verglichen mit dem statischen Umgebungsdruck während Zeitspannen relativ hoher Steuerfluidströmung führt.

2. Druckregler nach Anspruch 1, wobei der Ventilstellantrieb (50) von dem Typ mit "halber Fläche" mit zwei verbundenen Kolben (54, 56) mit unterschiedlichen Flächen ist, wobei der Kolben (56) mit kleinerer Fläche durch Fluid mit Versorsungsdruck unter Druck gesetzt wird und der Kolben (54) mit der größeren Fläche durch Fluid mit moduliertem Steuerdruck unter Druck gesetzt wird.

### Patentansprüche

1. Fluiddruckregler mit einem in einer Fluidförderleitung (8) angeordneten Steuerventil (12), wobei das Fluid stromaufwärts des Ventils (12) mit einem ersten, höherem Druck geliefert wird und

### Revendications

1. Régulateur de la pression d'un fluide ayant un clapet de commande (12) disposé dans un conduit (8) de transport du fluide, ce fluide étant fourni, en amont du clapet (22), à une première pression élevée tandis que le fluide, en aval du clapet (12), est réglé à une seconde pression plus basse, le régulateur comportant en outre un premier conduit de commande (16) recevant un flux de fluide de commande provenant du conduit (8), en amont du clapet de commande (12), et déchargeant le flux de fluide de commande, à partir d'une buse de commande (26), vers et dans un volume de commande (24), un orifice calibré (20) disposé dans le premier conduit de commande (16) et dimensionné de manière que le flux de fluide de commande s'écoule à travers lui en étant dans le régime d'un flux étranglé, un diaphragme (28) flexible sous l'effet d'une différence de pression, ayant une première face (32) tournée vers l'intérieur du volume de commande (24) et une seconde face (36) communiquant avec le conduit (8), en aval du clapet de commande (12), par l'intermédiaire d'un second conduit de commande (40), un moyen répondant à la flexion du diaphragme (28) en restreignant le flux de fluide de commande à l'endroit de la buse de commande (26), un conduit d'actionneur (58), relié au premier conduit de commande (16) en un point situé entre l'orifice calibré (20) et la buse de commande (26), ce conduit d'actionneur (58) fournissant un signal d'actionnement, à pression de commande modulée, à un actionneur pneumatique (50) du clapet, relié mécaniquement au clapet de commande (12), et un orifice d'échappement (70) disposé entre l'intérieur du volume de commande (24) et l'environnement du régulateur, cet orifice d'échappement (70) mettant à l'échappement, vers l'environnement, la totalité du flux de fluide de commande provenant du volume de commande (24), cet orifice d'échappement (70) étant en outre dimensionné de manière à produire une pression statique élevée du fluide dans le volume de commande (24), comparativement à la pression statique ambiante, pendant des périodes à flux relativement élevé du fluide de commande.

2. Régulateur de pression suivant la revendication 1 caractérisé en ce que l'actionneur (50) du clapet est du type à "demi-surface" ayant deux pistons accouplés (54,56) de surfaces différentes, le piston (56) de plus petite surface étant mis sous pression par le fluide à la pression d'alimentation tandis que le piston (54) de plus grande surface est mis sous pression par le fluide à la pression de commande modulée.

Fig. 1

Fig. 2

Fig. 3